# EUROPEAN PATENT APPLICATION

(11) **EP 2 108 262 A1**
(43) Date of publication of application: **14.10.2009**
(21) Application number: 08251413.4
(22) Date of filing: 11.04.2008
(51) Int. Cl.: A21C 15/02, A23G 3/20

(54) **Rippled wafer**

(71) Applicant: MARS, INCORPORATED, McLean, Virginia 22101-3883 (US)
(72) Inventor: Taylor, Will Masterfoods, Slough, Berkshire SL1 4JX (GB)
(74) Representative: Marlow, Nicholas Simon

(57) **Abstract**

The invention provides a confectionery bar 110 comprising a rippled wafer 112 comprising a base portion 116 and two lobes 118, enrobed in a layer 114 of chocolate. The base portion 116 and the lobes 118 define between them a channel 120. A cylindrical bar 122 of caramel partly fills the channel 120. The lobes 118 are convoluted portions of wafer ribbon. The invention also encompasses a rippled wafer having a channel shaped cross section and a rippled wafer comprising two lobes, and provides a method and apparatus for forming rippled wafers.

## Description

This invention relates to rippled edible wafer and a method and apparatus for the production thereof.

International patent application no. WO 2004/062374 discloses an edible rippled wafer formed of a convoluted ribbon. The wafers described in that document are of generally cylindrical cross-section, and may be presented in a confectionery product, surrounded by a fat based creme or other soft layer with a hard shell, such as a chocolate shell, if desired. The convolutions in the rippled wafer of WO 2004/062374 impart a characteristic 'snap' to the product. The wafers of WO 2004/062374 can be made by baking wafer batter on a drum oven, doctoring the baked wafer off the oven surface and collecting it in elongate cavities in the surface of a rotary forming drum. As the forming drum rotates, the wafer is cut by the action of the doctor blade and the forming drum surface between cavities.

It is known to make confectionery products from rippled ribbons of chocolate.

According to a first aspect of the present invention there is provided a rippled wafer formed of a convoluted sheet of wafer, such as a ribbon of wafer, having a channel shaped cross-section. The channel may be open or closed. According to a second aspect of the present invention there is provided a rippled wafer formed of a convoluted sheet of wafer having a cross-section including two lobes. The cross section of each lobe may regular, for example rectangular, or irregular. Preferably, a channel section is defined by the two lobes, which channel may be open or closed. Preferably, the cross-section has an average of at least 8 turns/cm², preferably 12 turns/cm², a turn being a change of direction of at least 45°. The wafer may have two or more substantially parallel channels. The invention also envisages confectionery bars including the ripple wafers of the invention. The channel or channels may be filled with confectionery material, and the bar may be enrobed, for example in chocolate.

Also according to the invention there is provided a method of continuously making a rippled wafer according to the first or second aspect of the invention comprising; forming a continuous sheet of a wafer in a plastic state, continuously moving the wafer to a gathering device, continuously gathering the sheet to ripple it, continuously moving the gathered wafer to mould and continuously forming the gathered sheet in a mould. Preferably, the moulding step comprises forming a channel in the rippled wafer. Also preferably, the steps of gathering and forming the sheet are performed after the wafer has been subjected to cooking or other heating, preferably on a drum oven.

During the cooking of wafer batter, the wafer reaches a temperature above its glass transition temperature, T_{g}, and is in a plastic state, in which the wafer is flexible. As the wafer cools below T_{g} it becomes hard and friable; organoleptically, it is crisp and crunchy. and rigid. In the plastic state, the sheet of wafer can be handled and is pliable enough to form into a desired configuration. During cooling, the desired configuration is held and when the sheet temperature drops below T_{g}, the sheet will remain in the configuration.

Also according to the invention there is provided apparatus for continuously forming a rippled wafer from a sheet of wafer comprising; means for continuously supplying a sheet of wafer in a plastic state, a funnel for gathering the sheet of wafer into a rippled condition and a former for continuously forming the gathered, rippled wafer.

The former may make one or more open channels in the rippled foodstuff, in which case the former may be a pair of continuous belts, one or both of which are profiled. Alternatively, the sheet may be gathered around the former, in which case the former may be a rod around which the sheet is gathered, to form one or more closed channels in the rippled foodstuff

The invention will be further described, by way of example, with reference to the drawings, in which:
Figure 1 shows schematically a cross-section through a confectionery bar including a rippled wafer according to a first embodiment of the invention;
Figure 2 shows schematically a cross-section through a confectionery bar including a rippled wafer according to a second embodiment of the invention;
Figure 3 shows schematically a perspective view of a linear wafer forming apparatus according to the invention suitable for making the wafer of the confectionery bar shown in Figure 1;
Figure 4 shows a cross-section on line IV-IV of Figure 4;
Figure 5 shows an enlargement of part of Figure 5;
Figure 6; is a similar view to figure 5 but of another embodiment of a linear wafer forming apparatus according to the invention;
Figure 7 shows schematically a cross section through a confectionery bar including a rippled wafer according to a third embodiment of the invention
Figure 8 shows schematically a cross section through a confectionery bar including a rippled wafer according to a fourth embodiment of the invention.

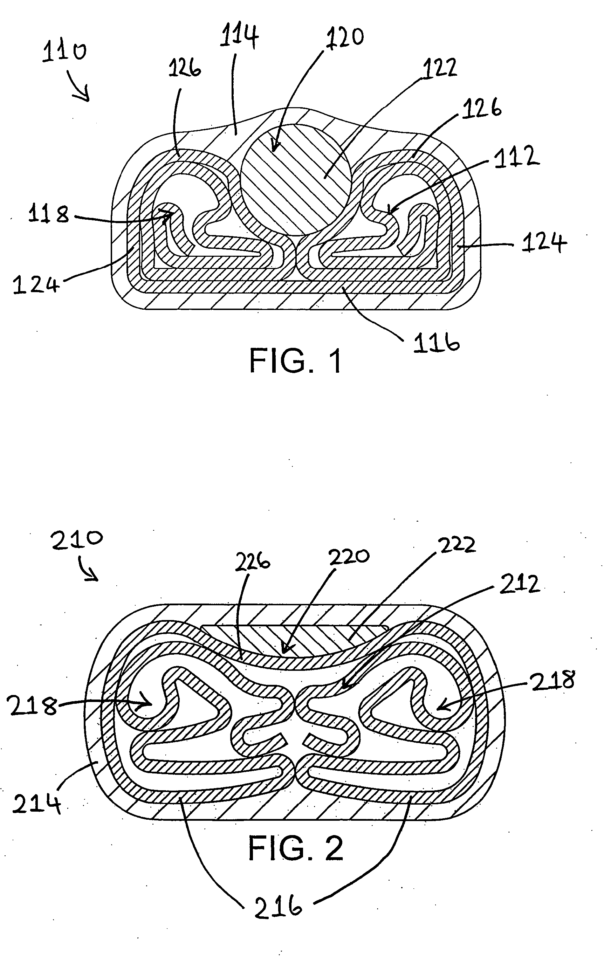

The confectionery bar 110 shown in Figure 1 comprises a rippled wafer 112 enrobed in a layer 114 of chocolate. The wafer 112 is formed of a ribbon of wafer and comprises a base portion 116 and two lobes 118 extending in the same direction from each end of the base. The base portion 116 and the lobes 118 define between them a channel 120. A cylindrical bar 122 of caramel partly fills the channel 120.

The lobes 118 are convoluted portions of wafer ribbon, as can be seen from Figure 1. They are irregular in cross section, but are preferably of generally constant and similar cross sections. The base portion 116 turns upward (as seen in Figure 1) to form the outer surfaces 124 of the lobes 118 and turns inward to form upper surfaces 126 of the wall portions 118. The remainder of the lobes 118 is formed by convolutions of the ribbon of wafer. The substantially continuous nature of the outer surface of the rippled wafer allows the efficient application of a thin barrier layer, such as a barrier layer containing fat to prevent migration into the wafer of moisture from a component surrounding the wafer.

There are preferably more than 8 turns/cm² of wafer cross section (a turn is a change of direction of at least 45°), more preferably more than 12 turns/cm² of wafer cross section. This has been found to produce a wafer with desirable eating properties, such as a good 'snap' when it is bitten into by the consumer.

Figure 2 shows a confectionery bar 210 according to a second embodiment of the invention. It comprises a rippled wafer 212 enrobed in a layer of chocolate 214. The wafer 212 is a ribbon of wafer and comprises a continuous upper surface 226 having a shallow longitudinal channel 220 along it. Lobes 218 below the upper surface 226 of the rippled wafer turn inward to provide the base portion 216 of the rippled wafer. A strip 222 of caramel or other filling sits in the channel 220 in the upper surface 226 of the rippled wafer 212.

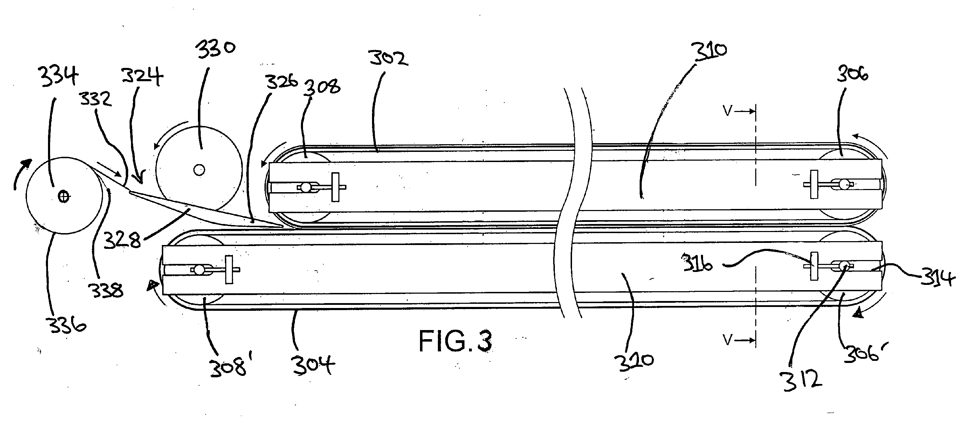

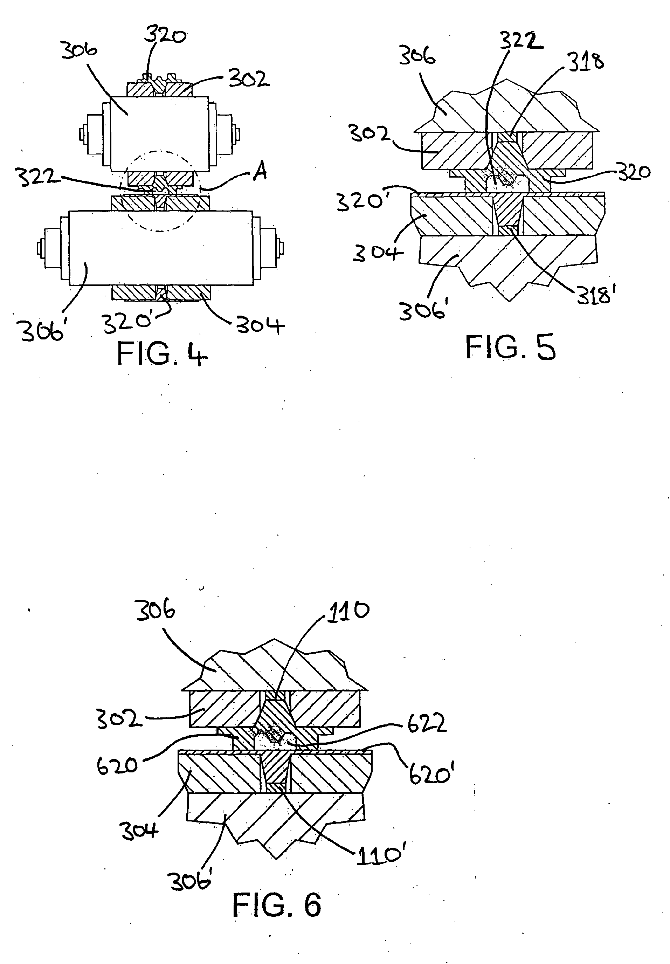

Figures 3, 4 and 5 show an embodiment of a linear wafer forming apparatus according to the invention suitable for making the rippled wafer 12 of Figure 1. Figure 4 is a cross-section view of the apparatus of Figure 4 along the line V-V. Figure 5 shows an enlargement of the part of Figure 4 within circle A.

The continuous linear wafer forming apparatus 100 of Figures 3, 4 and 5 forms an open channel in the wafer. It a comprises an upper endless forming belt 302 and a lower endless forming belt 304 driven by upper 306 and lower 306' driving rollers, respectively, around upper 308 and lower 308' idler rollers. The driving rollers are rotated by one or more motors, not shown, such as electric motors, at the same angular speed as each other but in different directions, as shown by the arrows in Figure 3. The lower belt 304 run extends further in the upstream direction (the left in Figure 3) of the apparatus than the upper belt 106 run. The rollers 306, 206', 308, 308' are supported by frame members 310. The axles 312 of the rollers are held in longitudinal slots 314 in the frame members 310 and the belt tension can be adjusted by moving the axles 312 within the slots 314 with adjusters 316.

The belts 302, 304 are provided with mountings 318, 318' for longitudinally profiled upper 320 and lower 320' flexible profiling strips to be carried by the belts. In the embodiment shown the upper profiled strip 320 on the upper belt 302 defines the upper part of a moulding cavity 322 having a rounded M shape in cross-section. In this embodiment the lower profiled strip 320' carried by the lower belt 304 is a flat strip (except for portion which cooperates with the mounting 318' to the lower belt 304).

A folding funnel 324 is located immediately upstream of the upstream end of the upper belt 302, over the upstream end of the lower belt 304. The folding funnel 324 is in the form of a tray 326 tapering from a wide upstream end to a narrow downstream end having approximately the same width as the cavity 322 defined by the profiling strips 320, 320'. The funnel 324 is angled down toward the upstream end of the lower run of the upper belt 302. Walls 328 at the sides of the tray forming the funnel 324 are curved over the tray 326. A folding wheel 330 is mounted for rotation, driven by means not shown, above the folding funnel 324 and extends down between the sidewalls 328.

In use, the belts 302, 304 and the folding wheel 330 are driven, by means not shown, as indicated by the arrows in Figure 3, so that the opposed faces of the belts are moving away from the folding funnel 324 and the folding wheel 330 urges material in the funnel toward the belts. A sheet 332 of wafer in plastic state at a temperature above its glass transition temperature T_{g}, conveniently supplied from a rotary drum oven 328, is introduced into the upstream end of the folding funnel 324. The taper of the funnel 324, the curvature of the side walls 328 and the action of the rotating folding wheel 330 cause the sheet of wafer to be gathered together to form a continuous rippled wafer, the folds of the ripples being parallel to the direction of the movement of the wafer, which is fed into the cavity 322 between the profiling strips 320, 320' on the upper 302 and lower 304 belts. The rippled wafer is constrained between the profiling strips and carried along the belt run. As it passes along the belt run, the rippled wafer cools to below its glass transition temperature T_{g}, at which point it will hold its profiled shape outside the belts. The rippled wafer is ejected from between the belts at the downstream end of the belt run, after which it can be further processed. The shape of the cavity 314 is such that the rod of rippled wafer has a channel in its upper (as seen in Figures 3, 4 and 5) face. The cavity 314 shown in Figures 3, 4 and 5 has a rounded M cross-section; it will be appreciated that cavities of other cross-sections may be employed, so long as the cavity forms a channel in the rod of rippled wafer.

In other embodiments of the linear wafer forming apparatus of the invention, the profiling strips define a cavity which imparts two or more channels to the rippled wafer. Figure 6 shows an exemplary embodiment of such strips. The view shown in Figure 6 is a cross section through the belts and profiling strips. The lower profiling strip 6 which is carried on the lower continuous belt 304 is flat. The upper profiling strip 620 carried on the upper continuous belt 302 is shaped so that the moulding cavity 622 defined by the profiling strips 620, 620' moulds two substantially parallel channels in the rippled wafer. The belts pass around driving rollers 306, 306', and this embodiment is otherwise like that shown in Figures 3, 4 and 5.

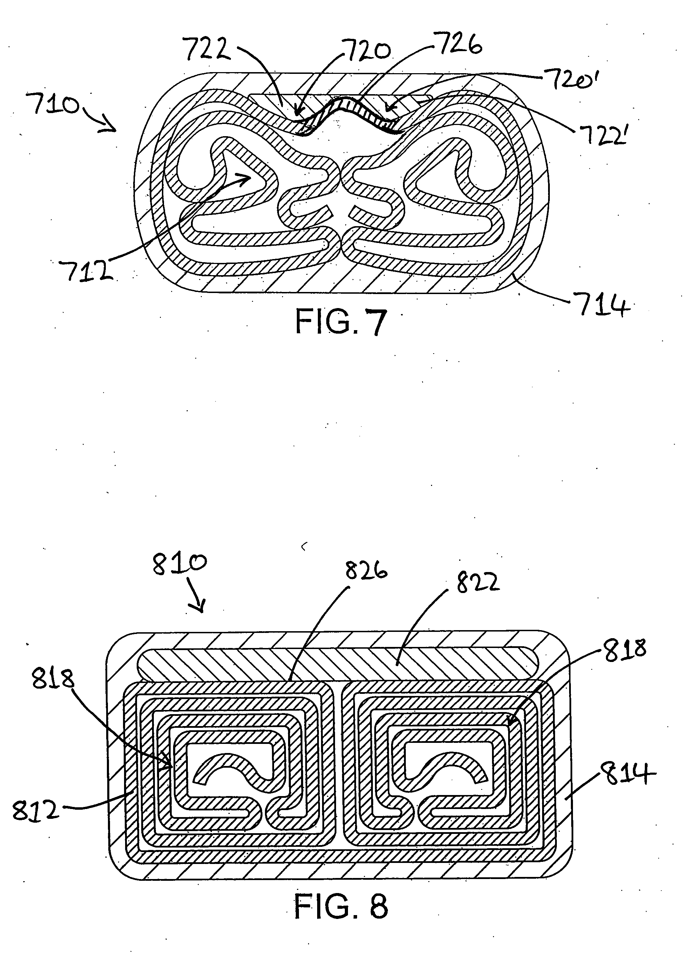

Figure 7 shows a confectionery bar 710 comprising a rippled wafer 712 made on an apparatus like that shown in Figure 6, having two substantially parallel channels 720, 720' in its upper surface 726. The channels are filled with a filling 722, such as caramel; the fillings in the two channels may be the same or different. Otherwise, the bar of this embodiment is similar to that shown in Figure 2, the filled rippled wafer being enrobed in a layer 714 of chocolate.

Figure 8 shows a confectionery bar 810 comprising a rippled wafer 812 made on an alternative embodiment of the apparatus of the invention, not shown. In this apparatus, the moulding cavity 322 defined by the profiling strips upper 320, 320' does not define a channel in the finished wafer. Instead, the wafer is substantially rectangular in cross section and the lobes 818 abut one another. The rippled wafer 812 in this configuration is particularly well suited to carry a substantially flat strip 822 of a confectionery filling such as caramel on its upper surface 826. Otherwise, the bar is similar to that shown in Figure 1, the wafer 812 and filling strip 822 being enrobed in a layer of chocolate 814.

In other embodiments of the apparatus of the invention, not shown, a forming rod extends from upstream of the belts into the gap between them. Folded wafer from the funnel 324 wraps around the rod, forming a channel in the rippled wafer. The endless forming belts 302, 304 may be plain, without profiled strips, or may include profiled strips. Embodiments of this type are particularly suitable for forming a rippled wafer having a closed channel through it. Advantageously in such embodiments, the rod is a hollow pipe through which filling can be introduced into the channel once the rippled wafer has been formed.

In other embodiments of the apparatus of the invention, not shown, one or both of the profiling strips 320, 320' has 'V' section ridges across it, transverse to the direction of movement of the belt. These impinge on the gathered wafer in the moulding cavity 322 and impress a line of weakness across the rippled wafer making it easier to break or cut into lengths. The spacing of the ridges corresponds to the desired length of the rippled wafer pieces.

The rotary drum wafer oven 334 is of a well known type, for example a type EWB from Haas. It includes a heated drum 336 mounted for clockwise rotation about its central axis, as shown by the arrow in Figure 3. The baking surface of the heated drum is at a temperature of about 160°C. A doctor blade 338 is mounted adjacent the drum 336. In use, wafer batter is applied to the heated baking surface of the rotating drum 338 of the oven. The wafer batter bakes as the drum rotates to form a continuous baked layer of wafer which is removed from the surface of the drum as a continuous ribbon 332 by the doctor blade 338.

The wafer is made from a batter which preferably comprises:
wheat flour, preferably at 25% to 50%, more preferably 25% to 35%, by weight;
sugar, preferably at 20 % to 35%, more preferably 22% to 33%, by weight;
water, preferably at 35% to 50%, more preferably 35 % to 45%, by weight;
fat, preferably at up to 5%, more preferably 2% to 5%, by weight;
skimmed milk powder, preferably at up to 55% by weight.

The batter may include other ingredients to modify the flavour or other characteristics of the wafer, such as cocoa powder.

The drum of the rotary drum wafer oven is preferably at a temperature of from 140°C to 170°C. The water content of the formed wafer is preferably from 0.8% to 1.4% by weight, and the water activity a_{w} of the formed wafer is preferably from 0.15 to 0.35.

As the ribbon of wafer enters the folding funnel 324 it is at a temperature above T_{g}, the glass transition temperature of the wafer. T_{g} is typically from about 95°C to about 105°C for a batter containing sucrose; the T_{g} will be different for different recipes and sugar systems. At this temperature, the wafer is plastic enough to be moulded by the funnel 324 and the cavity 322 defined by the profiled strips 320, 320' of the forming belts 302, 304. As the wafer passes through the apparatus toward the output end, it cools to below T_{g}, so that it is no longer plastic when it leaves the apparatus. The cooling of the wafer can be achieved by allowing the wafer to cool in ambient (about 18°C to about 25°C) air as it passes along the belt run. In order to shorten the length of the belt run, active cooling, by means not shown, may be employed. For example, ambient or cooled air can be blown over the wafer or one of the belts can be replaced by a water cooled platen.

In order to make a confectionery product of the type shown in Figure 1, a continuous rod 122 of caramel is introduced into the channel 120 in the formed wafer 112. This can be done after the wafer has left the belt run. Alternatively, a rod of caramel can be introduced into the wafer as it is gathered into ripples in the folding funnel 324, before it passes between the belts 302, 304. In the case of rippled wafers having more than one channel, the channels can contain the same or different filings. The filled rippled wafer is cut to length and enrobed in chocolate by well known means.

The invention will be further described by the following Example.

### Example

A wafer batter having the following composition is made in a high shear batter mixer (% by weight):

| | |
|---|---|
| flour | 33% by weight |
| sugar | 22% |
| water | 40% |
| fat | 4% |
| lecithin | 0.4% |

The flour can be any grain flour, flour from pulses, or any refined component, or combinations of these.

The batter was cooked on an EWB oven from Haas having a drum temperature of 140°C to 170°C. The cooked wafer was taken off the drum at 160°C, above the T_{g} of the wafer, and fed into a linear wafer forming apparatus of the type shown in Figures 4, 5 and 6, in which the wafer was formed into a continuous rippled wafer having a cross section similar to that shown in Figure 1. The rippled wafer cooled to below the T_{g} of the wafer in the linear former and was cut into 10cm lengths as it exited the linear former. The rippled wafer produced in this example had about 10 turns/cm².

A crème was applied in the groove formed in the shaped wafer and the filled piece then enrobed in chocolate by conventional techniques.

It will be appreciated that the rippled wafers of the invention may be of wide variety of channel cross sections and that the method and apparatus of the invention can make rippled wafers of many different cross sections.

The invention provides a method of making a continuous rod of rippled wafer which can have a channel in it. The rippled wafer is formed longitudinally, and can be cut to desired lengths before or after the channel is filled.

The invention provides a rippled wafer, a confectionery bar, apparatus for continuously forming a rippled wafer from a sheet of wafer and a method of continuously making a rippled wafer as defined in any of the following numbered paragraphs.
1. A rippled wafer formed of a convoluted sheet of wafer having a channel shaped cross-section.
2. A rippled wafer formed of a convoluted sheet of wafer having a cross-section including two lobes.
3. A rippled wafer according to paragraph number 2 in which the cross section of each lobe is regular.
4. A rippled wafer according to paragraph number 2 or 3 in which the two lobes of the cross section define a channel therebetween.
5. A rippled wafer according to any preceding numbered paragraph the cross-section of which has an average of at least 8 turns/cm² wherein a turn is a change of direction of at least 45°.
6. A rippled wafer according to any preceding numbered paragraph in which the sheet of wafer is a ribbon of wafer
7. A rippled wafer according to any preceding claim numbered paragraph having a plurality of substantially parallel channels.
8. A confectionery bar comprising a rippled wafer according to any preceding claim.
9. A confectionery bar according to paragraph number 8 in which the channel is filled with a confectionery material.
10. A confectionery bar according to paragraph number 8 or 9 in which the rippled wafer is enrobed in a confectionery coating such as chocolate.
11. Apparatus for continuously forming a rippled wafer from a sheet of wafer comprising:
   means for continuously supplying a sheet of wafer in a plastic state;
   a funnel for gathering the sheet of wafer into a rippled condition; and
   a former for continuously forming the gathered, rippled wafer.
12. Apparatus according to paragraph number 11 in which the former is a mould.
13. Apparatus according to paragraph number 11 or 12 for forming at least one channel in the gathered, rippled wafer.
14. Apparatus according to paragraph number 11, 12 or 13 in which the mould is at least one continuous belt downstream of the said funnel.
15. Apparatus according to paragraph number 11, 12, 13 or 14 in which the mould is at least one profiled continuous belt downstream of the said funnel.
16. Apparatus according to paragraph number 14 or 15 in which the mould is an opposed pair of continuous belts, at least one of which is a profiled belt.
17. Apparatus according to any of numbered paragraphs 11 to 16 in which the mould comprises a rod around which the sheet of wafer can be formed.
18. Apparatus according to any of numbered paragraphs 11 to 17 in which the means for continuously supplying a sheet of wafer in a plastic state is a rotary drum oven.
19. A method of continuously making a rippled wafer according to any of claims numbered paragraphs 1 to 7 comprising:
   forming a continuous sheet of a wafer in a plastic state;
   continuously moving the wafer to a gathering device;
   continuously gathering the sheet to ripple it;
   continuously moving the gathered wafer to mould; and
   continuously forming the gathered sheet in a mould.
20. A method according to paragraph number 19 in which the continuous sheet of wafer is gathered substantially transversely to it's direction of movement.
21. A method according to paragraph number 19 or 20 in which the step of forming the gathered sheet in a mould comprises forming a channel in the gathered sheet.
22. A method according to paragraph number 19, 20 or 21 in which the steps of gathering and forming the sheet are performed after the wafer has been subjected to cooking or other heating.
23. A method according to any of numbered paragraphs 19 to 22 in which the step of forming a continuous sheet of wafer in a plastic condition is carried out on a drum oven.
24. A method according to any of numbered paragraphs 19 to 23 in which the step of gathering the sheet to ripple it comprises continuously passing the sheet through a funnel which tapers in the direction of movement of the sheet.
25. A method according to any of numbered paragraphs 19 to 24 in which the step of continuously forming the gathered sheet in a mould comprises continuously passing the gathered sheet between a pair of continuous belts at least one of which is a profiled belt.

## Claims

1. A rippled wafer formed of a convoluted sheet of wafer having a channel shaped cross-section.

2. A rippled wafer formed of a convoluted sheet of wafer having a cross-section including two lobes.

3. A rippled wafer according to claim 2 in which the cross section of each lobe is regular, preferably in which the two lobes of the cross section define a channel therebetween.

4. A rippled wafer according to any preceding claim the cross-section of which has an average of at least 8 turns/cm² wherein a turn is a change of direction of at least 45°.

5. A confectionery bar comprising a rippled wafer according to any preceding claim.

6. Apparatus for continuously forming a rippled wafer from a sheet of wafer comprising:
means for continuously supplying a sheet of wafer in a plastic state;
a funnel for gathering the sheet of wafer into a rippled condition; and
a former for continuously forming the gathered, rippled wafer.

7. Apparatus according to claim 6 for forming at least one channel in the gathered, rippled wafer.

8. Apparatus according to claim 6 or 7 in which the mould is at least one continuous belt, preferably a profiled belt, downstream of the said funnel.

9. Apparatus according to claim 6, 7 or 8 in which the mould is an opposed pair of continuous belts, at least one of which is a profiled belt.

10. Apparatus according to any of claims 6 to 9 in which the mould comprises a rod around which the sheet of wafer can be formed.

11. A method of continuously making a rippled wafer according to any of claims claim 1 to 5 comprising:
forming a continuous sheet of a wafer in a plastic state;
continuously moving the wafer to a gathering device;
continuously gathering the sheet to ripple it;
continuously moving the gathered wafer to mould; and
continuously forming the gathered sheet in a mould.

12. A method according to claim 11 in which the continuous sheet of wafer is gathered substantially transversely to it's direction of movement.

13. A method according to claim 11 or 12 in which the step of forming the gathered sheet in a mould comprises forming a channel in the gathered sheet.

14. A method according to claim 11, 12 or 13 in which the step of gathering the sheet to ripple it comprises continuously passing the sheet through a funnel which tapers in the direction of movement of the sheet.

15. A method according to any of claims 11 to 14 in which the step of continuously forming the gathered sheet in a mould comprises continuously passing the gathered sheet between a pair of continuous belts at least one of which is a profiled belt.
